(19) Europäisches Patentamt

European Patent Office

Office européen des brevets

(11) **EP 1 076 394 A2**

(12) **EUROPÄISCHE PATENTANMELDUNG**

(43) Veröffentlichungstag:
**14.02.2001 Patentblatt 2001/07**

(51) Int. Cl.⁷: **H02J 3/18**

(21) Anmeldenummer: **00117048.9**

(22) Anmeldetag: **09.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **10.08.1999 DE 19937661**
**10.12.1999 DE 19959572**
**10.12.1999 DE 19959573**

(71) Anmelder: **NKT Cables GmbH**
**51063 Köln (DE)**

(72) Erfinder:
• **Brakelmann, Heinrich, Prof. Dr.-Ing.**
**47495 Rheinberg (DE)**
• **Rasquin, Werner, Prof. Dr.-Ing.**
**50668 Köln (DE)**

(54) **Schaltungsanordnung für ein Drehstromübertragungssystem**

(57) Es wird eine Schaltungsanordnung für ein Drehstromübertragungssystem zu Kompensationszwecken angegeben. Auf mindestens einem Abschnitt (12) des Drehstromübertragungssystems, auf dem für jeden Phasenleiter (10) eine elektrische Isolierung (15), eine metallische Abschirmung (20) oder ein metallischer Mantel vorhanden oder - wie bei einer Freileitung - abschnittsweise eingefügt sind, ist der Abschirmung (20) oder dem Mantel ein Blindwiderstand (100) in Reihe geschaltet und die Impedanz des Blindwiderstandes (100) ist so gewählt oder so wählbar, daß die Blindleistung des Übertragungssystems bei der Netzfrequenz (fo) oder bei mindestens einer Oberschwingung (fv) gemindert oder sogar minimiert ist.

FIG. 1

**Beschreibung**

Die Erfindung betrifft eine Schaltungsanordnung für ein Drehstromübertragungssystem.

Bei der Übertragung elektrischer Energie mit Drehstromkabeln oder Freileitungen ergeben sich aufgrund ihrer Längsimpedanzen störende induktive Längsspannungen, die die Übertragungslängen begrenzen. Diese Längsimpedanzen setzen sich zusammen aus dem ohmschen Widerstand des Phasenleiters einerseits und andererseits aus der Längsinduktivität, die ein Maß für das vom Übertragungssystem bei Netzfrequenz erzeugte Magnetfeld ist. So geht man heute im allgemeinen davon aus, daß die Übertragungslängen von Drehstromkabeln (in der Regel 16 2/3; 50 bzw. 60 Hz) aufgrund ihres Übertragungsverhaltens je nach Spannungsebene auf ca. 20 bis 50 km begrenzt sind. Die übertragbaren Leistungen liegen bei Kabeln meist weit unter der natürlichen Leistung.

Die natürliche Leistung ist diejenige Leistung, die übertragen würde, wäre das Kabel mit seinem Wellenwiderstand abgeschlossen. Dieser Betriebzustand ist ideal, da sich einerseits Spannung und Strom längs der Leitung nicht ändern, und andererseits die Verluste der Übertragung minimal werden.

Weiterhin ist zu beobachten, daß durch den stark anwachsenden Einsatz der Leistungselektronik in der elektrischen Energietechnik, z.B. bei den alternativen Energiequellen, die Versorgungsnetze zunehmend mit Oberschwingungen belastet werden, die ein Abweichen von Strom und Spannung vom sinusförmigen Verlauf und mithin eine Verminderung der Versorgungsqualität bewirken.

Es ist die Aufgabe der Erfindung, Kompensationsmaßnahmen vorzuschlagen, die das Übertragungsverhaltung von Drehstromübertragungssystemen verbessert, bzw. optimiert.

Die Lösung wird in den Merkmalen des Hauptanspruchs realisiert. Weiterführende Ausführungsformen sind in den Unteransprüchen formuliert.

Die Ausführungsformen zielen darauf ab, durch geeignete Beschaltungen eines Abschnitts einer Freileitung oder des Mantel- bzw. Schirm-Kreises eines Kabels oder aber mit Hilfe von Umbauwandlern die Längsimpedanz gegenüber Schwingungen ausgewählter Frequenzen zu erhöhen und dadurch die Ausbreitung dieser Oberschwingungen längs einer Freileitung oder eines Kabels zu behindern. Weiterhin kann durch die erfindungsgemäße Beschaltung die Längsimpedanz bei Netzfrequenz kompensiert werden, so daß sich Übertragungslängen vergrößern lassen.

Bei Kabeln kann die Erfindung realisiert werden, ohne daß die Kabelleiter kontaktiert werden müssen, d.h. die Filter- bzw. Kompensationseinrichtungen müssen nicht für die hohe Übertragungsspannung des Kabelsystems ausgelegt werden.

**Darstellung anhand der Figuren**

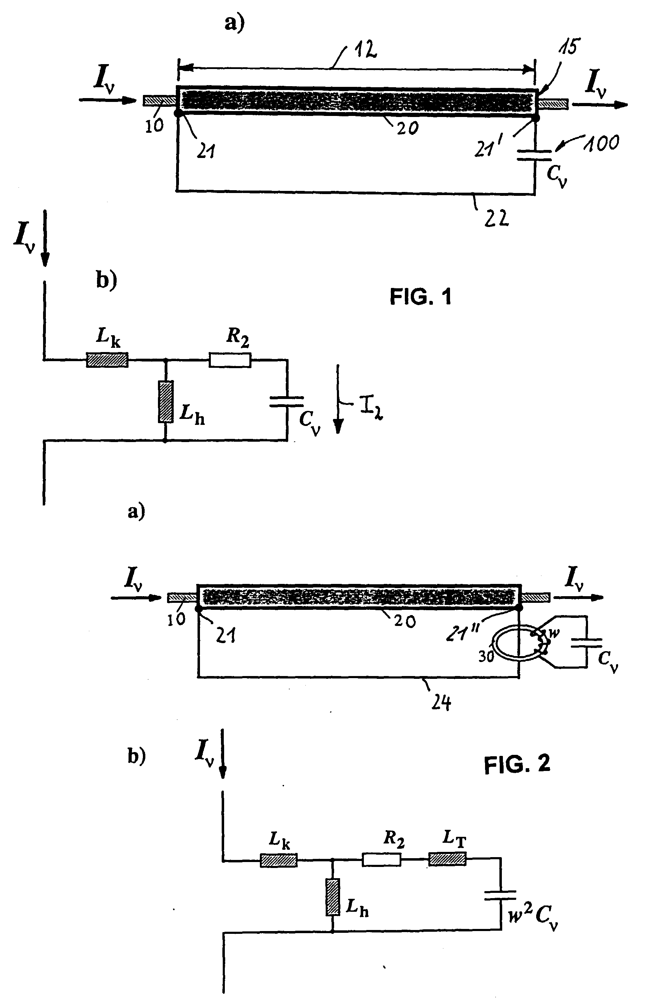

Fig. 1a zeigt eine Ader 10 mit Isolierung 15 eines Drehstromkabels, die einen äußeren Metallmantel 20 aufweisen soll. Vorschlagsgemäß bildet dieser Metallmantel in bestimmten Abschnitten 12 mit dem Rückleiter eine Schleife 22, wobei in die Kurzschlußverbindungen 22 an den Mantelabschnittsenden 21, 21' eine Kapazität $C_v$ (100) geschaltet werden soll. Die Anbindung der Kurzschlußverbindung an den Metallmantel in den Punkten 21, 21' kann beispielsweise in einem Anschlußgehäuse (joint box) gelegt werden, welches ähnlich aufgebaut ist, wie es bei Auskreuzungsschaltungen benutzt wird. Einem ersten Abschnitt auf der Übertragungsstrecke gemäß Fig. 1a können sich weitere Abschnitte mit parallel geschalteten Blindwiderständen (kapazitiver, induktiver Art) anschließen.

Fig. 1b zeigt - unter Vernachlässigung der Leitungsquerzweige - das Ersatzschaltbild des Kabels. Betrachtet wird ein Oberschwingungsstrom $I_v$ als Komponente des Transportstroms. Dieser Oberschwingungsstrom $I_v$, der die Frequenz $f_v$ = n $f_0$ (z.B. $f_0$ = 50 oder 60 Hz; n = ganze Zahl, n = 1 bei Netzfrequenz) aufweist, durchfließt zunächst die Induktivität $L_k$ und baut damit ein magnetisches Feld zwischen Leiter und Metallmantel auf. In Reihe hierzu liegt die Induktivität $L_h$, die ein Maß für das außerhalb des Metallmantels herrschende Magnetfeld ist. Bei offenem Mantelkreis wird die Induktivität $L_h$ vom vollen Strom $I_v$ durchflossen. Kabel haben hohen induktiven, Freileitungen einen entsprechend kapazitiven Blindwiderstand. Demgemäß muß die Kompensationsmaßnahme in Sinne der Erfindung auf induktive oder auf kapazitive Längsimpedamz abgestellt werden.

Bei der Schaltung nach Fig. 1b fließt im Mantelkreis ein Strom $I_2$, der ein Magnetfeld außerhalb der Kabelader über dieselbe Induktivität $L_{hv}$ aufbaut wie der Leiterstrom. Dieser Mantelstrom $I_2$ muß außerdem den ohmschen Widerstand des Mantelkreises $R_2$ sowie die Kapazität $C_v$ überwinden.

Damit muß nach Fig. 1b der Transportstrom insgesamt die folgende Längsimpedanz überwinden (ohmsche Widerstände vernachlässigt):

$$Z_{lv} = jX_{kv} + j\frac{\omega_v L_h}{1 - \omega_v^2 L_h C_v} \tag{1}$$

mit $\omega_\nu = 2\pi f_\nu$ der Kreisfrequenz der $\nu$-ten Oberschwingung.

Diese Längsimpedanz wird sehr groß - sie wird allein durch die beteiligten ohmschen Widerstände begrenzt - , wenn die Kapazität gegen die Resonanzbedingung strebt:

$$C_\nu = \frac{1}{\omega_\nu X_{h\nu}} \; . \tag{2}$$

Die Längsimpedanz $Z_{l\nu}$ wird dann allein durch den ohmschen Widerstand $R_2$ begrenzt und hat die Größe:

$$Z_{l\nu} = j\frac{(X_{k\nu}+X_{h\nu})^2}{R_2} \; . \tag{3}$$

Wird also der Widerstand $R_2$ des Mantelkreises hinreichend klein gewählt, so können sehr große Impedanzen hinsichtlich der betrachteten Oberschwingungsfrequenz aufgebaut werden. Sollen mehrere Oberschwingungsfrequenzen unterdrückt werden, so muß die beschriebene Kompensations-, bzw. Resonanzschaltung in mehreren Mantelabschnitten des Kabels realisiert werden, wobei jeweils unterschiedliche, der zu unterdrückenden Frequenz $f_\nu$ angepaßte Filterkapazitäten $C_\nu$ in die Mantelkreise zu schalten sind.

Die Ausführungen gelten sinngemäß auch für die Kompensation von Längsimpedanzen (Blindleistungen) bei Netzfrequenz aufgrund störender induktiver Längsspannungen, die die Übertragungslängen begrenzen.

Verringerung der notwendigen Filterkapazität $C_\nu$ durch einen Transformator im Mantelkreis

Um die erforderliche große Kompensationskapazität $C_\nu$ zu verringern, wird eine Schaltung nach Fig. 2a vorgeschlagen. Hier wird die Kurzschlußverbindung 24 an einem Ende des Mantelabschnitts 21'' durch einen Transformatorkern 30 geführt, der sekundärseitig mit w Windungen belegt ist.

Fig. 2b zeigt das resultierende Ersatzschaltbild. Der im Wesentlichen erreichte Effekt besteht darin, daß die erforderliche Filterkapazität $C_\nu$ jetzt im Mantelkreis um den Faktor $w^2$ - also um das Quadrat der Windungszahl w - vergrößert erscheint, der Aufwand für die kapazitive Filterung also verringert werden kann. Es gilt:

$$C = \frac{1}{w^2}\frac{1}{\omega_\nu X_{h\nu}} \; . \tag{4}$$

Verringerung der Filterkapazität $C_\nu$ durch mehradrige Parallelkabel

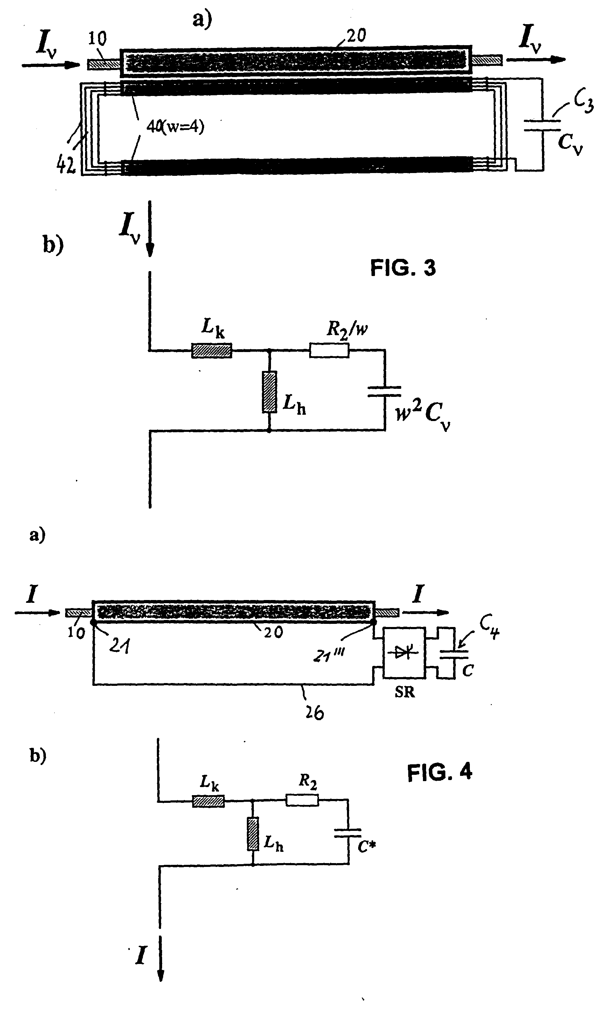

Der zuvor beschriebene transformatorische Effekt läßt sich auch dadurch erreichen, daß parallel zum Hochspannungskabel mehradrige Kabel 40 entsprechend Fig. 3a verlegt sind, die durch entsprechende Hintereinanderschaltung ihrer Leiter 42 eine Spule im Magnetfeld des Hochspannungskabels bilden, die in Reihe mit der Filterkapazität ($C_3$) liegt.

Auch in diesem Fall wird die erforderliche Filterkapazität um $w^2$ - also um das Quadrat der Windungszahl w, verringert. Ein besonderer Vorteil dieser Variante kann darin bestehen, daß mit der Filtermaßnahme überhaupt nicht mehr in die Konstruktion bzw. Beschaltung des Hochspannungskabels eingegriffen wird.

Die in den Parallelkabeln 40 entstehenden Verluste könnten zudem durch eine Zwangskühlung abgeführt werden, so daß das Hochspannungskabel weder durch zusätzliche Mantelstrom-Verluste noch durch sonstige zusätzliche Verlustwärme im Kabelgraben gestört wird.

Eine andere Ausführungsart dieses Prinzips kann darin bestehen, die mehradrigen Parallelkabel direkt in die Kabelkonstruktion zu integrieren, was beispielsweise durch einen Schirm aus isolierten Einzeldrähten realisiert werden kann.

Filterung oder Kompensation durch Stromrichter

Zur Verringerung der erforderlichen Kompensationskapazität $C$ wird außerdem eine Schaltung nach Fig. 4 vorgeschlagen. Hier wird die Kurzschlußverbindung 26 an einem Ende des Mantelabschnitts 21''' über eine Stromrichterschaltung SR geführt. Durch die geregelte Halbleiterschaltung (VSI = voltage sourced inverters) kann erreicht werden, daß der Stromfluß verzögert einsetzt oder vorzeitig abbricht, d.h. gegenüber der treibenden Spannung voreilt oder nacheilt. Je nach Regelung der Schaltung wirkt diese also kapazitiv oder induktiv.

Enthält die Stromrichterschaltung zusätzlich einen Transformator, so wirkt die Anordnung bei entsprechender Ansteuerung wie eine vergrößerte Kapazität. Eine ausführliche Beschreibung einer solchen Schaltung wird in *B. Kastenny, C. Hatziadoniu, A. Funk: VSI-Based Series Compensation Scheme for Transmission Lines in ETEP Vol. 9 No. 2, March/April 1999, pp. 101-104* gegeben. Im Ersatzschaltbild der Fig. 4b erscheint dann eine entsprechend vergrößerte Kompensationskapazität C*, so daß der Aufwand für die kapazitive Kompensation verringert wird.

Eine weitere Möglichkeit besteht darin, die Stromrichterschaltung nach Fig. 4a so anzusteuern, daß sie dem Mantelkreis - und damit transformatorisch auch dem Kabelleiter - den Oberschwingungsströmen gleichgroße, entgegengerichtete Ströme einprägt, so daß durch die Stromrichterschaltung eine Kompensation der Oberschwingungsströme bewirkt wird.

Der beschriebene Einsatz von Stromrichterschaltungen zur Filterung oder zur Kompensation von Oberschwingungsströmen kann in unterschiedlichen Schaltungen realisiert werden, - ähnlich wie zuvor für die Filterkapazität beschrieben.

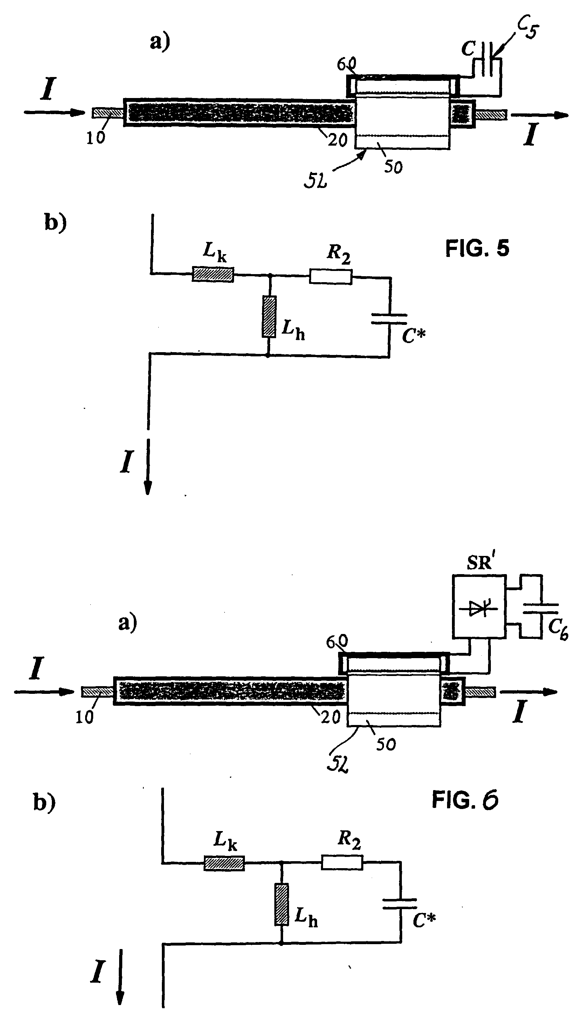

Infrage kommen folgende Anordnungen bzw. Schaltungen: Transformator mit Stromrichterschaltung im Mantelkreis nach Fig. 4, mehradrige, parallele Induktionsleiterkabel mit Stromrichterschaltung nach Fig. 5 und Umbauwandler mit Stromrichterschaltung nach Fig. 6. In Fig. 5a ist eine Schaltung für ein Kabel mit Umbauwandler 52 und Filterkapazität $C_5$ dargestellt und in Fig. 5b das entsprechenden Ersatzschaltbild für den Leitungs-Längszweig. Die Bezugszeichen 50 bedeuten Wandlerkern und 60 die Wandlerwicklung. In Fig. 6a wird ein Kabel mit Umbauwandler und Stromrichterschaltung SR' wiedergegeben und in Fig. 6b das zugehörige Ersatzschaltbild für den Leitungs-Längszweig.

### Ausführungsform der Optimierung der Übertragung bei Netzfrequenz

Wie schon erwähnt, können die für Oberschwingungen formulierten Kompensationsmaßnahmen in sinngemäßer Anpassung auch für den Einsatz bei Netzfrequenz für Kabel oder Freileitungen angewendet werden.

Im einfachsten Fall wird dies dadurch realisiert, daß mindestens einer Länge des Schirms oder des Mantels des Phasenleiters ein Kondensator in Reihe geschaltet ist. Die Impedanz des Übertragungssystems für Netzfrequenz läßt sich somit kompensieren, da die Kapazität so wählbar ist, daß die Blindleistung des Übertragungssystems minimiert ist. Diese Ausführungsform kann sowohl für metallisch geschirmte Einleiterkabel als auch für Mehrleiterkabel und für gasisolierte Leitungen eingesetzt werden. Mit der dieser Ausführungsform ist die Übertragungseigenschaft des Übertragungssystems in Richtung auf seine natürliche Leistung optimierbar. Eine einfache Ausgestaltung liegt darin, einen kapazitiven Blindwiderstand einer Länge des Mantels oder des Schirms des Kabels in Reihe zu schalten.

Ein derart betriebenes Kabelsystem weist nur noch geringe Längsspannungen auf, die allein durch den ohmschen Widerstandsbelag des Phasenleiters bestimmt sind.

Mit dieser Ausführungsform wird es möglich, nicht nur die Übertragungsspannung, den Lastfluss und die Leitungsimpedanz optimal einzustellen, sondern auch lastabhängig regelbar zu gestalten.

Diese Ausführungsform erlaubt es, sowohl für den Vollastfall als auch für den Leerlauffall geeignete Maßnahmen vorzusehen. Bei Betrieb des Übertragungssystems bei einer festen Leistung ist die Zuschaltung eines festen Blindwiderstandes (Kondensator) die einfachste Möglichkeit. Wenn das Übertragungssystem mit variabler Leistung betrieben werden soll (dies dürfte die Regel sein), wird vorgeschlagen, von der Last abhängige Kapazitäten zuzuschalten. Die Meß- und Regelgröße in diesem Fall ist der Phasenleiterstrom, der beispielsweise mittels eines Stromwandlers abgenommen werden kann.

Im Leerlauf eines Übertragungssystems läuft diese Ausführungsform daraufhinaus, die Längsinduktivität hochzusetzen und damit den kapazitiven Ladestrom zu verringern.

Weitere Ausgestaltungen bestehen im Einzelnen aus folgenden Merkmalen.

Die Erfindung wird an jedem Phasenleiter des Übertragungssystems vorgenommen, wobei Schirm oder Mantel der Phasenleiter möglichst symmetrisch beschaltet werden sollten. Der Blindwiderstand kann aus einem oder mehreren Kondensatoren bestehen, die in Abhängigkeit von der Last des Übertragungssystems zu- oder abschaltbar sind.

Im allgemeinen durfte die Kapazität des oder der Kondensatoren sehr groß gewählt werden müssen. Daher werden auch Alternativen vorgeschlagen, bei denen in einer Schaltungsanordnung ein Kondensator elektrisch nachgebildet wird, so daß der körperlich eingesetzte Kondensator mit einer deutlich kleineren Kapazität gewählt werden kann. Die einen Kondensator nachbildende Schaltungsanordnung hat den Effekt, eine wirksame Kapazität zu erzeugen, die der Anforderung an die Optimierung entspricht, aber eine kleinere Kapazität verlangt, als für die wirksame Kapazität notwendig wäre.

Die einen Kondensator nachbildende Schaltungsanordnung kann aus einer Kurzschlußverbindung bestehen, die über einen Stromrichter geführt ist, der die Netzfrequenz fo des Übertragungssystems auf eine um einen Faktor erhöhte Frequenz f2 umsetzt und mit einer Kapazität belastet ist. Dann kann eine Kapazität eingesetzt werden, die um den Faktor f2/fo verkleinert ist.

Die einen Kondensator nachbildende Schaltungsanordnung kann aus einer Kurzschlußverbindung bestehen, die durch einen Transformatorkern geführt ist, der sekundärseitig mit einer Anzahl w von Windungen belegt und mit einer Kapazität belastet ist. Mit einer solchen Maßnahme ist ein Kondensator einsetzbar, dessen Kapazität um den Faktor $1/w^2$ kleiner ist.

Der Transformatorkern kann als Kabel-Umbautransformatorkern ausgebildet sein.

Die Sekundärseite des Transformators kann über einen Stromrichter geführt sein, der die Netzfrequenz des Übertragungssystems um eine um einen Faktor erhöhte Frequenz umsetzt und mit einer Kapazität belastet ist. Wiederum kann die Kapazität des eingesetzten Kondensators deutlich kleiner gewählt werden, als für die wirksame Kapazität notwendig.

Die einen Kondensator nachbildende Schaltungsanordnung kann aus einer Induktivität mit einer Anzahl von Windungen bestehen, die in Reihe mit einer Kapazität liegt. Die Induktivität kann aus mindestens einem Kabel mit mehreren Einzelleitern bestehen, die zu einer Spule hintereinander geschaltet sind. Die Einzelleiter können zu einem mehradrigen Kabel zusammengefaßt sein und das mehradrige Kabel kann zwangsgekühlt sein. Die Induktivität kann auch durch im Schirm des Kabels liegenden Einzelleitern gebildet werden, wobei die Einzelleitern zu einer Spule hintereinander geschaltet werden.

Die vorgeschlagenen Maßnahmen erlauben erhebliche Beeinflussungen der Übertragungseigenschaften von Kabeln und Freileitungen bezüglich oberschwingungshaltiger Transportströme und bei der Kompensation störender Blindleistungen bei Netzfrequenz. Insbesondere der Einsatz von Frequenzumrichtern erscheint hierbei für die Zukunft des in rasanter Entwicklung befindlichen Gebiets der Leistungshalbleiter vielversprechend. Lastabhängige Kompensations- und Anpassungsmaßnahmen mit Hilfe von Stromrichterschaltungen, wie sie für Freileitungsübertragungen im Zusammenhang mit flexible ac-transmission systems (FACTS) zur Zeit weltweit im Brennpunkt der Netzentwicklungen stehen, können für Drehstromkabel auf weitaus einfachere Weise realisiert werden, da anstelle von Höchstspannungstransformatoren nur Umbautransformatoren für Niederspannung oder Mittelspannung eingesetzt werden müssen.

Im folgenden soll der theoretische Hintergrund der Kompensationsmaßnahme bei Netzfrequenz betrachtet werden. Hierbei wird der ohmsche Widerstand des Mantelkreises R vernachlässigt. Damit muß der Transportstrom insgesamt die folgende Längsimpedanz $Z_l$ überwinden. Die Bezeichnungen entsprechen den üblichen elektrischen Kurzzeichen:

$$Z_l = jX_k + j\frac{\omega L_h}{1-\omega^2 L_h C} \tag{5}$$

Diese Längsimpedanz bei Netzfrequenz verschwindet, wenn die Kapazität zu

$$C = \frac{1}{\omega} \frac{X_h + X_k}{X_h X_k} \tag{6}$$

gewählt wird. Die Kapazität muß sehr groß gewählt werden. Um die Kompensationskapazität C zu verringern, werden weitere Alternativen vorgeschlagen, um schaltungstechnisch die Kapazität heraufzusetzen. In Fig. 2a wird die Kurzschlußverbindung 24 an einem Ende des Mantelabschnitts durch einen Transformatorkern 30 geführt, der sekundärseitig mit w Windungen belegt und mit der Kompensationskapazität $C_v$ belastet ist.

Die 'wirksame' Kapazität entspricht gemäß Ersatzschaltbild $C = w^2 C_v$. Der im Wesentlichen erreichte Effekt besteht darin, daß die erforderliche Kompensationskapazität $C_2$ (= $C_v$) jetzt im Mantelkreis um den Faktor $w^2$ - also um das Quadrat der Windungszahl w vergrößert - erscheint, der Aufwand für die kapazitive Kompensation also verringert werden kann. Es gilt:

$$C = \frac{1}{w^2} \frac{1}{\omega} \frac{X_h + X_k}{X_h X_k} \tag{7}$$

Der zuvor beschriebene transformatorische Effekt läßt sich auch dadurch erreichen, daß parallel zum Hochspannungskabel 10 mehradrige Kabel entsprechend Fig. 3a verlegt sind, die durch entsprechende Hintereinanderschaltung (in Fig. 3a sind es vier) ihrer Leiter 42 eine Wicklung oder Spule 40 im Magnetfeld des Hochspannungskabels 10 bilden, die in Reihe mit der Kompensationskapazität $C_3$ (= $C_v$) liegt.

Auch in diesem Fall wird die erforderliche Kompensationskapazität um $w'^2$, also um das Quadrat der Windungszahl w', verringert; gemäß Ersatzschaltbild $C = w'^2 C_3$.

Ein besonderer Vorteil dieser Variante besteht darin, daß mit der Kompensationsmaßnahme überhaupt nicht mehr in die Konstruktion bzw. Beschaltung des Hochspannungskabels eingegriffen wird.

Eine andere Ausführungsart dieses Prinzips kann darin bestehen, die mehradrigen Parallelkabel direkt in die Kabelkonstruktion zu integrieren, was beispielsweise durch einen Schirm aus isolierten Einzeldrähten realisiert werden kann.

Zur Verringerung der erforderlichen Kompensationskapazität C wird außerdem eine Schaltungsanordnung nach Fig. 4a vorgeschlagen. Hier wird die Kurzschlußverbindung 26 an einem Ende des Mantelabschnitts über eine Stromrichterschaltung SR geführt, die bei entsprechender Ansteuerung wie eine große Kapazität wirkt. Mit der Regelung über eine Halbleiterschaltung (VSI = voltage sourced inverters) kann erreicht werden, daß der Stromfluß verzögert einsetzt oder vorzeitig abbricht, d.h. gegenüber der treibenden Spannung voreilt oder nacheilt. Je nach Regelung der Schaltung wirkt diese also kapazitiv oder induktiv.

Im Ersatzschaltbild der Fig. 4a erscheint dann eine entsprechend vergrößerte Kompensationskapazität $C = C_4$, so daß der Aufwand für die kapazitive Kompensation verringert wird.

Eine weitere Möglichkeit zur Beeinflussung der Kabellängsimpedanz bietet sich durch Einsatz eines Umbauwandlers 52, dessen Kern 50 die Kabelader 10 umgibt und dessen Wicklung 60 mit der Kompensationskapazität $C_5$ beschaltet wird, vergl. Fig. 5a. Auch bei dieser Schaltungsanordnung wirkt die Kompensationskapazität $C_5$ um das Quadrat der Windungszahl der Wicklung 60 vergößert auf das Kabel ein.

Diese Maßnahme hat den Vorteil, daß längs der Kabeltrasse kein zusätzlicher Kompensationsstrom fließt, so daß die Kabeltrasse thermisch nicht zusätzlich belastet wird.

Wie zuvor beschrieben, so ergibt sich auch bei Einsatz eines Umbauwandlers die Möglichkeit der Beschaltung mit einer wahlweise kapazitiv oder induktiv wirkenden Stromrichterschaltung SR', vergl. Fig. 6a, so daß der Aufwand (Kondensator $C_6$) für die Kompensation verringert wird. Bezugszeichen sonst wie in Fig. 5a.

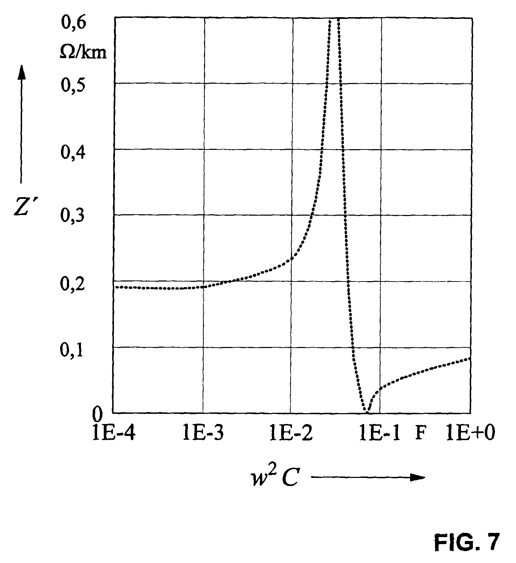

Mit allen vorgeschlagenen Maßnahmen besteht die Möglichkeit, durch eine äußere Beschaltung das Übertragungsverhalten zu beeinflussen. Dabei wird die Möglichkeit aufgezeigt, die Längsinduktivität zu verringern oder gar zum Verschwinden zu bringen. Wird die verwendete Kompensationskapazität in weiten Grenzen variabel gestaltet, so kann für die Längsreaktanz praktisch jede gewünschte Größe angesteuert werden. Hierzu zeigt Fig. 7 für eine gasisolierte Leitung (GIL) die Abhängigkeit der Längsreaktanz Z' von der wirksamen Kompensationskapazität $w^2C$.

Damit besteht bei variabler, gegebenenfalls geregelter Kompensationskapazität auch die Möglichkeit, Übertragungssysteme mit ihrer natürlichen Leistung zu betreiben. Bei einem solchen Betrieb ergibt sich langs des Übertragungssystems keine Änderung von Strom und Spannung, und der Wirkungsgrad der Übertragung wird optimal.

Der Einsatz der ersten Ausführungsform bei Kabeln und gasisolierten Leitungen nutzt den besonderen Vorteil, daß das elektrische Feld auf die elektrische Isolierung begrenzt ist, so daß mit Hilfe der zuvor beschriebenen Maßnahmen, d.h. allein durch Eingriff in das äußere Magnetfeld des Phasenleiters die gewünschte Beeinflussung der Übertragungseigenschaften möglich wird.

Ausführungsformen der Erfindung werden in den Figuren wiedergegeben. Es zeigen

| | |
|---|---|
| **Fig. 1**: | Kabel mit Filterkapazität im Mantelkreis mit **1a**) Schaltung; **1b**) Ersatzschaltbild für den Leitungs-Längszweig, |
| **Fig. 2:** | Kabel mit Transformator und Filterkapazität im Mantelkreis mit **2a**) Schaltung; **2b**) Ersatzschaltbild für den Leitungs-Längszweig, |
| **Fig. 3:** | Kabel mit mehradrigen Parallelkabel, deren Leiter zu einer Wicklung geschaltet sind, und Filterkapazität mit **3a**) Schaltung; **3b**) Ersatzschaltbild für den Leitungs-Längszweig, |
| **Fig. 4** | Kabel mit Stromrichterschaltung im Mantelkreis mit **4a**) Schaltung; **4b**) Ersatzschaltbild für den Leitungs-Längszweig, |
| **Fig. 5** | **5a**) Schaltung mit Umbauwandler und Filterkapazität; **5b**) Ersatzschaltbild für den Leitungs-Längszweig, |
| **Fig. 6** | **6a**) Schaltung mit Umbauwandler und Stromrichterschaltung; **6b**) Ersatzschaltbild für den Leitungs-Längszweig, |
| **Fig. 7** | Abhängigkeit des Reaktanzbelags einer gasisolierten Leitung von der wirksamen Kompensationskapazität und |
| **Fig. 8** und **Fig. 9** | zeigen zwei Ausführungsformen bei einer Hochspannungsfreileitung. |

**Ausführungsform für Hochspannungsfreileitungen**

Unter dem erwähnten Schlagwort FACTS ist bereits für Hochspannungsfreileitung bekannt, einen von der Lastsituation abhängigen, geregelten Kompensationsbetrieb vorzunehmen. Hierzu werden die auf Hochspannung liegenden Leiter mit einem Hochspannungstransformator beschaltet, was einen erheblichen Aufwand und damit Nachteil bedeutet.

Die Erfindung läßt sich demgegenüber jedoch vorteilhaft für eine Hochspannungsfreileitung einsetzen, um das Übertragungsverhalten bei Netzfrequenz oder bei einer Oberschwingung der Lastsituation optimal anzupassen.

Die Ausführungsform zielt darauf ab, entweder mit Hilfe von Stromwandlern oder durch geeignete Beschaltung des Mantel- bzw. Schirm-Kreises eines Kabels, welches in einen Abschnitt einer Hochspannungsfreileitung eingebracht wird, die Längsimpedanz in gewünschter Weise zu beeinflussen.

Für die Anwendung der Erfindung muß bei Freileitungen eine besondere Ausgestaltung gewählt werden, da - anders als bei Kabeln - deren elektrische Felder weit ausgedehnt sind, so daß keine Umbauwandler ohne Eingriff in die Freileitung eingesetzt werden können.

Die Merkmale der Anwendung für eine Hochspannungsfreileitung sind folgende:

Die erfindungsgemäße Längsspannungskompensation besteht darin, einen Abschnitt der Hochspannungsfreileitung über ein Kabel mit Metallschirm oder mit Metallmantel oder über eine gas-isolierte Leitung zu führen und das Kabel oder die gasisolierte Leitung mit einem Umbautransformator, mit einer Kompensations-Blindwiderstand und/oder einer geeigneten Stromrichterschaltung zu beschalten.

Der so gestaltete Abschnitt der Freileitung kann räumlich in einem geschlossenem Raum angeordnet sein. Die Freileitung kann ohne Durchführungen in den Raum hinein und hinaus geführt sein.

Die gasisolierte Leitung in dem Raum und die Durchführungen sollten für die Betriebsspannung der Freileitung ausgelegt sein. Die gasisolierte Leitung kann mit SF6 isoliert und die Durchführungen können demnach als SF6-Durchführungen ausgebildet sein.

Das in der Strecke ausgebildete Kabel kann als Baueinsatzkabel realisiert sein, wobei das Baueinsatzkabel zwischen zwei die Freileitung tragenden Masten angeordnet ist.

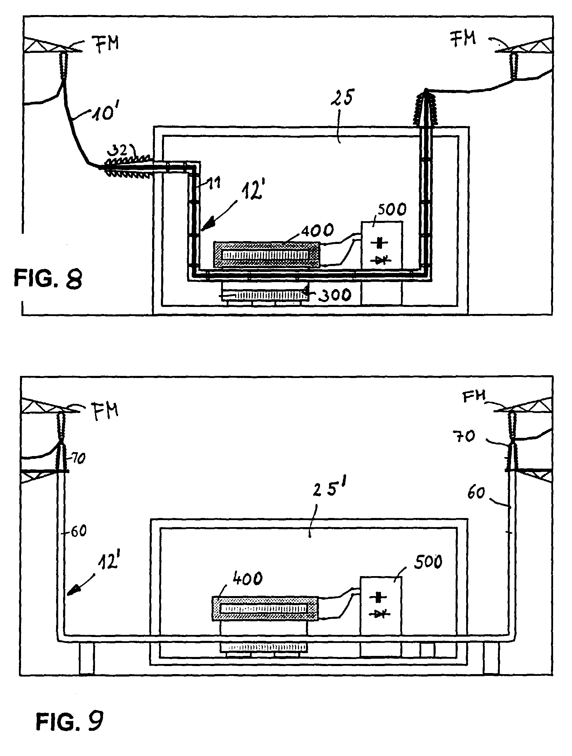

Zwei Ausführungsbeispiele für Freileitungen sind in den beiden Figuren 8 und 9 wiedergegeben. Sie zeigen Kompensationsanordnungen gemäß der Erfindung für eine Freileitung.

In der Fig. 8 ist ein erster Aufbau wiedergegeben. Die über Masten FM ankommende Freileitung 10' wird zu einem geschlossenen Raum 25 geführt, der als Container oder als Gebäude oder ähnlich ausgebildet sein kann. In dem Raum befindet sich eine gasisolierte Leitung (GIL) 11, die mit zwei einfachen SF6-Durchführungen (GIL-Endverschlüsse) 32 nach außen geführt wird. Die (z.B. mit SF6 oder einem SF6/Stickstoffgemisch) gasisolierte Leitung ist für die Betriebsspannung der Freileitung ausgelegt und nach den üblichen Gesichtspunkten von Innenraumschalt-anlagen konstruiert. Der Innenleiter der gasisolierten Leitung 11 wird über die zweite SF6-Durchführung wieder aus dem Raum 25 herausgeführt und mit der von dort abgehenden Freileitung kontaktiert. Auf eine besondere Form oder Ausgestaltung des Raums kommt es bei der Erfindung nicht an.

Mit einer solchen Anordnung sind nun im Bereich der gasisolierten Leitung 11 alle Maßnahmen möglich, die zuvor für Hochspannungskabel beschrieben wurden. Insbesondere kann nach Fig. 8 ein Umbautransformator 300 eingesetzt werden, dessen Sekundärwicklung 400 mit einem Kompensations-Blindwiderstand (100) und/oder einer geeigneten Stromrichterschaltung 500 beschaltet ist.

Alternativ zur Ausführung in Fig. 8 zeigt Fig. 9 eine Anordnung, bei der ein Kabel, beispielsweise ein sogenanntes Baueinsatzkabel 60 verwendet wird, wie es zur Überbrückung von Freileitungsfeldern eingesetzt wird. Die Endverschlüsse 70 des Baueinsatzkabels 60 werden direkt auf zwei Freileitungsmasten FM montiert, zwischen denen der Abschnitt 12' gemäß der Erfindung plaziert wird. Das Baueinsatzkabel wird dann z.B. ohne Hochspannungsdurchführungen durch einen geschlossenen Raum (Container, Gebäude) 25' geführt. Die ansonsten mit Hilfe eines Umbautransformators (400, 500) vorzunehmende Kompensationsmaßnahme bleibt dieselben wie zuvor beschrieben.

**Patentansprüche**

1. Schaltungsanordnung für ein Drehstromübertragungssystem, **dadurch gekennzeichnet**, daß mindestens auf einem Abschnitt (12,12') des Drehstromübertragungssystems, auf dem für ein Phasenleiter (10,10') eine elektrische Isolierung (15), eine metallische Abschirmung (20) oder ein metallischer Mantel vorhanden oder abschnittsweise eingefügt sind, der Abschirmung (20) oder dem Mantel ein Blindwiderstand ($C_v$, 100) in Reihe geschaltet ist und die Impedanz des Blindwiderstandes ($C_v$, 100) so gewählt oder so wählbar ist, daß die Blindleistung des Übertragungssystems bei Netzfrequenz (fo) oder bei mindestens einer Oberschwingung ($f_v$) der Netzfrequenz kompensierbar ist.

2. Schaltungsanordnung nach Anspruch 1, dadurch gekennzeichnet, daß an jedem Phasenleiter (10,10') des Übertragungssystems die Maßnahme gemäß Anspruch 1 vorgenommen ist.

3. Schaltungsanordnung nach Anspruch 1 oder 2, dadurch gekennzeichnet, daß mehrere Abschnitte (12,12') mit jeweils einem Blindwiderstand ($C_v$, 100) in Reihe geschaltet sind und die jeweilige Impedanz des Blindwiderstands ($C_v$, 100) eines Abschnitts (12,12') auf die Netzfrequenz (fo) oder eine Oberschwingung ($f_v$) abgestimmt ist.

4. Schaltungsanordnung nach einem der Ansprüche 1 bis 3, dadurch gekennzeichnet, daß der Blindwiderstand ($C_v$, 100) aus mindestens einem Kondensator ($C_v$) besteht.

5. Schaltungsanordnung nach einem der Ansprüche 1 bis 3, dadurch gekennzeichnet, daß der Blindwiderstand ($C_v$, 100) aus mehreren Kondensatoren besteht, die in Abhängigkeit von der Last des Übertragungssystems zu- oder abschaltbar sind.

6. Schaltungsanordnung nach einem der Ansprüche 1 bis 3, dadurch gekennzeichnet, daß der Blindwiderstand ($C_v$, 100) aus einer Schaltungsanordnung besteht, die einen Kondensator ($C_v$) nachbildet.

7. Schaltungsanordnung nach Anspruch 6, dadurch gekennzeichnet, daß die einen Kondensator ($C_v$) nachbildende Schaltungsanordnung aus einer Kurzschlußverbindung (24) besteht, die über einen Stromrichter (SR') geführt ist, der die Netzfrequenz (fo) des Übertragungssystems auf eine um einen Faktor erhöhte Frequenz umsetzt und mit einer Kapazität ($C_4$) belastet ist.

8. Schaltungsanordnung nach Anspruch 6, dadurch gekennzeichnet, daß die einen Kondensator ($C_v$) nachbildende Schaltungsanordnung aus einer Kurzschlußverbindung (24) besteht, die über einen Transformatorkern (30) geführt ist, der sekundärseitig mit einer Anzahl (w) von Windungen belegt und mit einer Kapazität ($C_2$) belastet ist.

9. Schaltungsanordnung nach Anspruch 8, dadurch gekennzeichnet, daß der Transformatorkern (30) als Kabel-Umbautransformatorkem ausgebildet ist.

10. Schaltungsanordnung nach Anspruch 9, dadurch gekennzeichnet, daß die Sekundärseite des Transformators gemäß Anspruch 7 über einen Stromrichter (SR') geführt ist.

11. Schaltungsanordnung nach Anspruch 6, dadurch gekennzeichnet, daß die einen Kondensator ($C_v$) nachbildende Schaltungsanordnung aus einer Induktivität (40) mit einer Anzahl (w) von Windungen (42) besteht, die in Reihe mit einer Kapazität ($C_3$) liegt.

12. Schaltungsanordnung nach Anspruch 11, dadurch gekennzeichnet, daß die Induktivität (40) aus mindestens einem Kabel mit mehreren Einzelleitern (42) besteht, die zu einer Spule hintereinander geschaltet sind.

13. Schaltungsanordnung nach einem der vorhergehenden Ansprüche in Anwendung auf eine Hochspannungsfreileitung, **dadurch gekennzeichnet**, daß ein Abschnitt (12') einer Hochspannungsfreileitung (10') über ein Kabel (60) mit Metallschirm (20) oder mit Metallmantel oder über eine gasisolierte Leitung (11) geführt wird und das Kabel (60) oder die gasisolierte Leitung (11) gemäß einer der Maßnahmen aus einem der vorhergehenden Ansprüche mit einem Umbautransformator (400), mit einem Kompensations-Blindwiderstand (100) und/oder einer geeigneten Stromrichterschaltung (500) beschaltet wird.

14. Schaltungsanordnung nach Anspruch 13, dadurch gekennzeichnet, daß der Abschnitt (12') in einem geschlossenen Raum (25,25') angeordnet ist.

15. Schaltungsanordnung nach Anspruch 14, dadurch gekennzeichnet, daß die Hochspannungsfreileitung (10') ohne Durchführungen in den Raum (25,25') hinein- und hinausgeführt ist.

16. Schaltungsanordnung nach Anspruch 13, dadurch gekennzeichnet, daß das Kabel als Baueinsatzkabel (60) realisiert ist und das Baueinsatzkabel (60) zwischen zwei die Hochspannungsfreileitung (10') tragenden Masten (FM) angeordnet ist.

a)

$I_v \longrightarrow$     12     15    $\longrightarrow I_v$

10   20   21'    100

21    $C_v$

22

$I_v \downarrow$

b)

**FIG. 1**

$L_k$    $R_2$

$L_h$    $C_v$   $I_2 \downarrow$

a)

$I_v \longrightarrow$            $\longrightarrow I_v$

10   21   20   21''   w

30   $C_v$

24

$I_v \downarrow$

b)              **FIG. 2**

$L_k$    $R_2$    $L_T$

$L_h$      $w^2 C_v$

a)

b)

FIG. 3

a)

b)

FIG. 4

**FIG. 5**

**FIG. 6**

FIG. 7

FIG. 8

FIG. 9